# EUROPÄISCHE PATENTSCHRIFT

(11) **EP 3 476 514 B1**
(45) Veröffentlichungstag und Bekanntmachung des Hinweises auf die Patenterteilung: **04.01.2023**
(21) Anmeldenummer: 17020498.6
(22) Anmeldetag: 26.10.2017
(51) Int. Cl.: F28D 9/00, F28F 3/02, B23K 1/00, B23K 1/008, B23K 101/14

(54) **VERFAHREN ZUR HERSTELLUNG EINES GELÖTETEN PLATTENWÄRMEÜBERTRAGERBLOCKS DURCH ABSCHNITTSWEISES LÖTEN**
METHOD FOR PRODUCING A SOLDERED PLATE HEAT EXCHANGER BLOCK BY MEANS OF SECTIONAL SOLDERING
PROCÉDÉ DE FABRICATION D'UN BLOC D'ÉCHANGEUR DE CHALEUR À PLAQUES BRASÉ PAR BRASAGE DES SECTIONS

(43) Veröffentlichungstag der Anmeldung: 01.05.2019
(73) Patentinhaber: Linde GmbH, 82049 Pullach (DE)
(72) Erfinder: Wanke, Rudolf, 85570 Ottenhofen (DE)
(74) Vertreter: Meilinger, Claudia Sabine

(56) Entgegenhaltungen:
- EP-A1- 1 815 934
- WO-A1-2015/132086
- DE-A1-102010 045 941
- US-A- 4 480 165

## Beschreibung

Die Erfindung betrifft ein Verfahren zur Herstellung eines gelöteten Plattenwärmeübertragerblocks und ein Verfahren zur Herstellung eines Plattenwärmeübertragers.

Aus dem Stand der Technik sind Plattenwärmeübertrager bekannt, welche dazu eingerichtet sind, die Wärme eines ersten Fluids oder einer ersten Fluidgruppe indirekt auf ein anderes, zweites Fluid oder eine andere zweite Fluidgruppe zu übertragen.

Dabei werden die Fluide in dem Plattenwärmeübertrager in separaten Wärmeaustauschpassagen des Plattenwärmeübertragerblocks geführt. Die Wärmeaustauschpassagen werden durch je zwei parallele Trennplatten des Plattenwärmeübertragerblocks begrenzt, zwischen denen jeweils eine Wärmeleitstruktur angeordnet ist, die auch als Fin bezeichnet wird.

Die WO 2015/132086 A1 offenbart ein Verfahren zur Herstellung eines gelöteten Blocks für einen Plattenwärmeübertrager.

Derartige Plattenwärmeübertragerblöcke sind z.B. in "The standards of the brazed aluminium plate-fin heat exchanger manufacturers association" ALPEMA, Third Edition, 2010 gezeigt und beschrieben. Ein solcher Plattenwärmeübertragerblock weist mehrere parallel zueinander angeordnete Trennplatten, in der Regel in Form von Trennblechen, auf, die eine Vielzahl von Wärmeaustauschpassagen für die miteinander in indirekte Wärmeübertragung zu bringenden Fluide bilden. Der Wärmeaustausch zwischen den am Wärmeaustausch teilnehmenden Fluiden findet dabei zwischen benachbarten Wärmeaustauschpassagen statt, wobei die Wärmeaustauschpassagen und somit die Fluide durch die Trennplatten voneinander getrennt sind. Der Wärmeaustausch erfolgt mittels Wärmeübertragung über die Trennplatten sowie mittels der zwischen den Trennplatten angeordneten Wärmeleitstrukturen (Fins). Die Wärmeaustauschpassagen sind durch bündig am Rand der Trennbleche angebrachte Randleisten (z.B. in Form von Blechstreifen), die auch als Sidebars bezeichnet werden, nach außen hin abgeschlossen. Der Plattenwärmeübertragerblock ist des Weiteren durch zwei äußerste Trennplatten, die als Deckplatten bezeichnet werden, nach außen begrenzt. Die Deckplatten sind meist ebenfalls in Form von ebenen Blechen ausgebildet, die jedoch in der Regel eine höhere Materialstärke aufweisen als die innenliegenden Trennbleche.

Derartige Plattenwärmeübertrager sind vorzugsweise aus Aluminium gebildet, wobei die Komponenten bzw. Bauteile durch Hartlöten miteinander verbunden werden.

Nach dem Stand der Technik wird bei der Herstellung eines solchen Plattenwärmeübertragerblocks ein Stapel der Komponenten, in der Regel aus lotplattierten Trennplatten, Wärmeleitstrukturen (Fins) und Randleisten (Sidebars) gebildet. Anschließend wird der Stapel in einem Vakuumlötofen auf die zum Löten notwendige Temperatur (im Folgenden auch als Loterweichungstemperatur bezeichnet) gebracht. Die Komponenten tauchen in das erweichte Lot ein und werden dadurch miteinander verlötet.

Während des Lötens ist es in der Regel notwendig die zu einem Stapel angeordneten Komponenten in einer Klemmeinrichtung zu fixieren. Dies bringt jedoch das Problem mit sich, dass Komponenten des Plattenwärmeübertragerblocks, insbesondere dünnwandige Wärmeleitstrukturen (Fins) unter Wirkung der Klemmkraft dauerhaft verformt (z.B. verbogen oder zusammengequetscht) werden können. Dies kann zu einer Einschränkung der Wärmeaustauschleistung des Plattenwärmetauschers führen, da einige Wärmeaustauschpassagen durch die mechanische Deformation der Wärmeleitstrukturen nicht mehr für die Fluide durchlässig sind.

Die beschriebene Problematik ergibt sich besonders in einem unteren Abschnitt des Plattenwärmeübertragerblocks. Hier wirkt nicht nur die Klemmkraft auf den Block ein, sondern auch die Gewichtskraft des darüber liegenden Abschnitts des Plattenwärmeübertragerblocks. Hinzu kommt, dass die Festigkeit der Komponenten, z.B. der Wärmeleitstrukturen, bei der Loterweichungstemperatur im Vergleich zur Festigkeit bei Normalbedingungen erniedrigt ist, so dass sich diese während des Lötens besonders leicht verformen können.

Somit ergibt sich die Aufgabe, ein Verfahren zur Herstellung eines Plattenwärmeübertragerblocks zur Verfügung zu stellen, das im Hinblick auf die beschriebenen Nachteile des Standes der Technik verbessert ist.

Diese Aufgabe wird durch das Verfahren zur Herstellung eines Blocks nach dem unabhängigen Anspruch 1 gelöst, wobei vorteilhafte Ausführungsformen in den Unteransprüchen 2 bis 11 angegeben sind.

Ein erster Aspekt der Erfindung betrifft ein Verfahren zur Herstellung eines gelöteten Blocks (auch als Plattenwärmeübertragerblock bezeichnet) für einen Plattenwärmeübertrager, wobei der Block eine Mehrzahl an Wärmeaustauschpassagen zum indirekten Wärmetausch zwischen zumindest zwei Fluiden aufweist, wobei zunächst eine Mehrzahl an Trennplatten und Wärmeleitstrukturen zusammen mit Lot (auch als Lotmaterial bezeichnet) in der Vertikalen in einem Block gestapelt werden, wobei nachfolgend in einem ersten Schritt
- der Block entlang der Vertikalen mit einer ersten Kraft, die von außen auf den Block einwirkt, beaufschlagt wird, und ein erster, oberer Abschnitt des Blocks auf eine Loterweichungstemperatur erwärmt wird, bei welcher das Lot erweicht, so dass der obere Abschnitt verlötet wird (das heißt insbesondere so dass die Wärmeleitstrukturen und Trennplatten bzw. Deckplatten des ersten Abschnitts verlötet werden), wobei zeitgleich ein zweiter Abschnitt des Blocks, der entlang der Vertikalen unten an den ersten Abschnitt angrenzt, auf eine im Vergleich zu der Loterweichungstemperatur reduzierte Temperiertemperatur gebracht wird, die oberhalb der Umgebungstemperatur liegt und bei welcher das Lot nicht erweicht, und wobei nachfolgend zu dem ersten Schritt in einem zweiten Schritt
- der Block entlang der Vertikalen mit keiner Kraft von außen oder einer zweiten Kraft, beaufschlagt wird, die von außen auf den Block einwirkt, wobei die zweite Kraft geringer ist als die erste Kraft, und der zweite Abschnitt des Blocks auf eine Loterweichungstemperatur gebracht wird, bei welcher das Lot erweicht, so dass der zweite Abschnitt verlötet wird (das heißt so dass insbesondere die Wärmeleitstrukturen und Trennplatten bzw. Deckplatten des zweiten Abschnitts verlötet werden), und wobei der erste Abschnitt zeitgleich auf eine im Vergleich zu der Loterweichungstemperatur reduzierte Temperiertemperatur gebracht wird, die oberhalb der Umgebungstemperatur liegt und bei welcher das Lot erhärtet oder nicht erweicht.

Dabei ist der besagte obere Abschnitt des Blocks insbesondere durch eine oberste Trennplatte bzw. Deckplatte nach oben hin begrenzt.

Unter Wärmeleitstrukturen sind insbesondere Heizflächenelemente (auch als Fins bezeichnet) und Verteilerfins zu verstehen.

Insbesondere ist das Lotmaterial auf die Trennplatten oder Wärmeleitstrukturen als Schicht aufgebracht (z.B. plattiert) oder eine Lotmaterialschicht ist wird beim Stapeln des Blocks zwischen die Trennplatten und die Wärmeleitstrukturen gelegt.

Die zu verlötenden Komponenten des Blocks sind insbesondere schichtartig quer zur Vertikalen erstreckt.

Die erste und die zweite Kraft, welche entlang der Vertikalen auf den Block einwirken, greifen insbesondere an den obersten (äußersten) Trennplatten bzw. Deckplatten des Blocks an.

Unter der Umgebungstemperatur ist diejenige Temperatur zu verstehen, die während des Verlötens des Blockes außerhalb des Blocks, insbesondere außerhalb eines Lötofens herrscht, in welchem der Block verlötet wird.

Das Erweichen des Lots bezeichnet den Übergang in einen fließfähigen bzw. teigigen Zustand, in welchem das Lot in der Lage ist, eine Lötverbindung zwischen den zu verlötenden Komponenten des Blocks zu bilden.

Die Differenz zwischen der Loterweichungstemperatur und der Temperiertemperatur ist insbesondere so gewählt, dass die Unterschiede in den Wärmedehnungen zwischen dem oberen Abschnitt und dem zweiten Abschnitt hinreichend klein für eine Verlötung des Plattenwärmeübertragerblocks sind,

Die Temperiertemperatur sowie die auf den Block ausgeübte externe Kraft (z.B. die erste und zweite Kraft) sind insbesondere derart gewählt, dass die Komponenten des zweiten Abschnitts unter Wirkung der externen Kraft nicht dauerhaft verformt werden,

Gemäß der Erfindung wird nicht der ganze Plattenwärmeübertragerblock gleichzeitig auf die zum Löten erforderliche Temperatur aufgeheizt, sondern das Löten findet schrittweise von oben nach unten statt (abschnittsweises Löten, Zonenlöten).

In dem zweiten Schritt des Verfahrens, in dem der zweite Abschnitt die Loterweichungstemperatur aufweist und somit relativ leicht verformbar ist, wirkt auf den besagten zweiten Abschnitt neben der externen zweiten Kraft auch die Gewichtskraft des oberen Abschnitts bzw. nur die Gewichtskraft des oberen Abschnitts (für den Fall, dass der Block in dem zweiten Schritt mit keiner externen Kraft beaufschlagt wird). Dadurch, dass die zweite Kraft erfindungsgemäß niedriger ist als die erste Kraft bzw. nur die Gewichtskraft des oberen Abschnitts wirkt, wird der zweite Abschnitt bei der Loterweichungstemperatur nicht dauerhaft verformt.

Die Temperiertemperatur des zweiten Abschnitts während des Verlötens des oberen Abschnitts kann insbesondere gleich groß sein wie die Temperiertemperatur des oberen Abschnitts während des Verlötens des zweiten Abschnitts. Alternativ können die Temperiertemperaturen des oberen Abschnitts und des zweiten Abschnitts unterschiedlich sein.

Es versteht sich, dass die besagten Abschnitte fließend ineinander übergehen können. Das heißt insbesondere, dass an den Grenzbereichen zwischen den Abschnitten jeweils ein Temperaturgradient zwischen der Loterweichungstemperatur und der Temperiertemperatur vorliegen kann.

Weiterhin kann das Verfahren in analoger Weise auch mit beliebig vielen Abschnitten und Schritten durchgeführt werden. Alternativ dazu kann das Verfahren statt in einzelnen Schritten auch kontinuierlich durchgeführt werden, z.B. indem der Abschnitt des Blocks, der die Loterweichungstemperatur aufweist, also der zu verlötende Bereich, während des Verfahrens von oben nach unten kontinuierlich verschoben wird, während die externe Kraft auf den Plattenwärmeübertragerblock kontinuierlich gesenkt wird.

Der Plattenwärmeübertragerblock weist insbesondere als Komponenten Trennplatten, Randleisten und Wärmeleitstrukturen auf, wobei die Wärmeaustauschpassagen jeweils zwischen zwei parallelen Trennplatten angeordnet sind, und wobei in der jeweiligen Wärmeaustauschpassage eine Wärmeleitstruktur (z.B. ein Heizflächenelement bzw. Fin oder ein Verteilerfin) angeordnet ist, und wobei die jeweilige Wärmeaustauschpassage zu den Seiten hin durch Randleisten (hierin auch als Sidebars bezeichnet) begrenzt ist, die zwischen den beiden die jeweilige Wärmeaustauschpassage begrenzenden Trennplatten angeordnet sind, wobei die jeweilige Wärmeleitstruktur alternierend angeordnete Berge und Täler aufweist, die über Flanken miteinander verbunden sind.

Bei dem Verlöten wird insbesondere eine metallurgische Verbindung zwischen den betreffenden Komponenten des Blocks und dem Lotmaterial erzeugt.

Unter einer metallurgischen Verbindung zwischen dem Lotmaterial und der jeweiligen Komponente (zum Beispiel Sidebar, Fin oder auch Trennplatte) wird im Rahmen der vorliegenden Erfindung insbesondere eine intermetallische Verbindung verstanden (also zwischen einem Metall oder einer Metalllegierung des Lotmaterials und einem Metall oder einer Metalllegierung der betreffenden Komponente), z.B. durch stoffschlüssiges Fügen von Metallen/Metalllegierungen der jeweiligen Komponente und des Lotmaterials.

Das Verlöten des Blocks wird insbesondere bei im Vergleich zum Umgebungsdruck erniedrigtem Druck durchgeführt, z.B. unter zumindest partiellem Vakuum in einem Vakuumofen. Alternativ kann der Lötvorgang auch bei Umgebungsdruck erfolgen, wobei ein Flussmittel an den zu verlötenden Komponenten zur Verfügung gestellt wird.

Durch das erfindungsgemäße Verfahren ergibt sich der Vorteil, dass die Komponenten des Blocks, insbesondere in seinem zweiten bzw. unteren Abschnitt, beim Verlöten der Komponenten nicht durch die zum Löten notwendige externe Kraft verformt und beschädigt werden. Hierdurch entfällt die Beeinträchtigung der Wärmeaustauschleistung des Blocks durch die verformten Komponenten.

Zudem ist es mit dem erfindungsgemäßen Verfahren möglich, einen Plattenwärmeübertragerblock einer größeren Höhe (entlang der Vertikalen) gemeinsam (als ein Teil) zu verlöten als mit den Verfahren nach dem Stand der Technik.

Gemäß einer Ausführungsform ist der erste Abschnitt durch eine obere Hälfte und der zweite Abschnitt durch eine untere Hälfte des Blocks gebildet.

Gemäß einer weiteren Ausführungsform umfasst der Block einen weiteren, dritten Abschnitt, der entlang der Vertikalen unten an den zweiten Abschnitt angrenzt, wobei nachfolgend zu dem zweiten Schritt gemäß einem dritten Schritt der Block mit keiner Kraft von außen beaufschlagt wird, und der dritte Abschnitt des Blocks auf eine Loterweichungstemperatur gebracht wird, bei welcher das Lot erweicht, und der zweite Abschnitt zeitgleich auf eine zur Loterweichungstemperatur reduzierte Temperiertemperatur gebracht wird, die oberhalb der Umgebungstemperatur liegt, und bei welcher das Lot erhärtet bzw. oder nicht erweicht.

Dabei wird insbesondere während des Verlötens des zweiten Abschnitts (also in dem zweiten Schritt) und während des Verlötens des dritten Abschnitts (also in dem dritten Schritt) auch der obere Abschnitt auf die Temperiertemperatur gebracht bzw. auf dieser gehalten.

Gemäß einer weiteren Ausführungsform ist der erste, obere Abschnitt durch ein oberes Drittel des Blocks gebildet, wobei der zweite Abschnitt durch ein mittleres Drittel des Blocks gebildet ist, und wobei der dritte Abschnitt durch ein unteres Drittel des Blocks gebildet ist.

Gemäß einer weiteren Ausführungsform werden die erste Kraft und die zweite Kraft mittels mindestens einer gespannten Feder auf den Block aufgebracht, wobei die mindestens eine gespannte Feder vorzugsweise von oben auf die äußerste, obere Trennplatte, bzw. Deckplatte, des Blocks einwirkt.

Es versteht sich, dass alternativ auch andere dem Fachmann bekannte Mittel zur Kraftübertragung bei dem erfindungsgemäßen Verfahren verwendet werden können, um die externe Kraft zur Verfügung zu stellen. Natürlich kann auch nur ein Mittel zur Kraftübertragung verwendet werden, wobei unterschiedlich große Kräfte einstellbar sind, um unterschiedliche Spannkräfte zur Verfügung zu stellen.

Gemäß einer weiteren Ausführungsform wird der Block während des Verlötens des oberen Abschnitts in dem ersten Schritt mittels einer ersten gespannten Feder und einer zweiten gespannten Feder mit einer addierten Kraft beaufschlagt wird, die der Summe der von der ersten gespannten Feder und der zweiten gespannten Feder auf den Block ausgeübten Kräfte entspricht und wobei der Block während des Verlötens des zweiten Abschnitts nur mittels der zweiten gespannten Feder mit der zweiten Kraft beaufschlagt wird.

Gemäß einer weiteren Ausführungsform kommt die erste Feder nach dem Verlöten des ersten, oberen Abschnitts in dem ersten Schritt an einem ersten Anschlag zum Anliegen, so dass die erste Feder nicht mehr auf den Block einwirkt, wobei die zweite Feder nach dem Verlöten des zweiten Abschnitts an einem zweiten Anschlag zum Anliegen kommt, so dass die zweite Feder nicht mehr auf den Block einwirkt.

Das heißt, die erste Feder übt keine Kraft auf den Plattenwärmeübertragerblock mehr aus, wenn sie den ersten Anschlag berührt und die zweite Feder übt keine Kraft auf den Plattenwärmeübertrager mehr aus, wenn sie den zweiten Anschlag berührt.

Das beschriebene Verfahren lässt sich natürlich analog auch mit beliebig vielen Federn und Anschlägen ausführen.

Gemäß einer weiteren Ausführungsform sind die Wärmeleitstrukturen durch gewellte Platten gebildet.

Gemäß einer weiteren Ausführungsform wird als zu verlötende Komponenten des Plattenwärmeübertragerblocks zumindest eine Mehrzahl an Trennplatten übereinander gestapelt, wobei zwischen je zwei benachbarten Trennplatten ein Fin oder ein Verteilerfin angeordnet wird.

Besonders Fins und Verteilerfins weisen eine Lamellen (bzw. Berg- und-Tal-) Struktur auf, so dass sich diese Bauteile durch eine zu hohe Kraft entlang der Vertikalen während des Lötverfahrens besonders leicht verformen können.

Gemäß einer weiteren Ausführungsform werden beim Stapeln der Trennplatten und Wärmeleitstrukturen zwischen benachbarten Trennplatten Randleisten angeordnet, die eine jeweilige Wärmeaustauschpassage nach außen hin abschließen.

Gemäß einer weiteren Ausführungsform liegt die Temperiertemperatur in einem Bereich von 5 °C bis 150 °C, insbesondere 30 °C °C bis 100°C, unterhalb der Loterweichungstemperatur.

Gemäß einer weiteren Ausführungsform liegt die Temperiertemperatur 5 °C, 10 °C, 15 °C, 20 °C, 25 °C, 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, 105 °C, 110 °C, 115 °C, 120 °C, 125 °C, 130 °C, 135 °C, 140 °C, 145 °C oder 150 °C unterhalb der Loterweichungstemperatur.

Ein zweiter Aspekt der Erfindung betrifft ein Verfahren zur Herstellung eines Plattenwärmeübertragers aufweisend zumindest einen Block hergestellt mit einem Verfahren nach der ersten Aspekt der Erfindung, wobei anschließend an den ersten und zweiten Schritt, insbesondere anschließend an den ersten, zweiten und dritten Schritt, mindestens ein Stutzen und/oder mindestens ein Sammler mit dem Block verbunden, insbesondere auf den Block aufgeschweißt wird.

Das erfindungsgemäße Verfahren wird vorzugsweise mit einer Vorrichtung zur Herstellung eines gelöteten Blocks für einen Plattenwärmeübertrager durchgeführt, wobei die Vorrichtung vorzugsweise aufweist:
- eine Heizvorrichtung (z.B. einen Lötofen) aufweist, die dazu ausgebildet ist, einen ersten, oberen Abschnitt eines Blocks umfassend eine Mehrzahl an Trennplatten und eine Mehrzahl an Wärmeleitstrukturen, die zusammen mit Lot in der Vertikalen in einem Block gestapelt sind, auf eine Loterweichungstemperatur zu erwärmen, bei welcher das Lot erweicht, und zeitgleich einen zweiten Abschnitt des Blocks, der entlang der Vertikalen unten an den ersten Abschnitt angrenzt, auf eine im Vergleich zu der Loterweichungstemperaturn reduzierte Temperiertemperatur zu bringen, die oberhalb der Umgebungstemperatur liegt und bei welcher das Lot nicht erweicht, und nachfolgend den zweiten Abschnitt auf eine Loterweichungstemperatur zu erwärmen, bei welcher das Lot erweicht, und den oberen Abschnitt auf eine im Vergleich zu der Loterweichungstemperatur reduzierte Temperiertemperatur zu bringen, die oberhalb der Umgebungstemperatur liegt und bei welcher das Lot nicht erweicht, und wobei die Vorrichtung zur Herstellung eines gelöteten Blocks weiterhin
- eine Spannvorrichtung (z.B. einen Spannrahmen) aufweist, die dazu ausgebildet ist, den Block entlang der Vertikalen mit einer von außen auf den Block einwirkenden ersten Kraft zu beaufschlagen, während der obere Abschnitt des Blocks auf die Loterweichungstemperatur erwärmt ist, und den Block entlang der Vertikalen (V) mit keiner Kraft von außen oder einer zweiten Kraft zu beaufschlagen, während der zweite Abschnitt des Blocks auf die Loterweichungstemperatur erwärmt ist, wobei die zweite Kraft geringer ist als die erste Kraft.

Die Spannvorrichtung weist vorzugsweise mindestens eine Feder auf, wobei die Spannvorrichtung dazu ausgebildet ist, die vorzugsweise von oben auf die äußerste, obere Trennplatte bzw. Deckplatte des Blocks einwirkende erste und zweite Kraft mittels der gespannten mindestens einen Feder auf den Block aufzubringen.

Die Spannvorrichtung weist vorzugsweise eine erste Platte und eine zu der ersten Platte parallele zweite Platte auf, wobei die erste Platte über mindestens eine Führung (z.B. eine Führungsstange oder Führungsschiene) mit der zweiten Platte derart verbunden ist, dass zumindest die erste Platte entlang der mindestens einen Führung verschiebbar ist, wobei die mindestens eine Feder dazu ausgebildet ist, eine parallel zu der mindestens einen Führung wirkende Kraft auf die erste Platte auszuüben.

Dabei ist die Spannvorrichtung insbesondere derart ausgebildet, dass der Block zwischen der ersten Platte und der zweiten Platte positionierbar ist, und derart dass der Block mittels der mindestens einen gespannten Feder über die erste Platte mit der ersten und zweiten Kraft beaufschlagt werden kann.

Die Spannvorrichtung ist vorzugsweise dazu ausgebildet, den Block während des Verlötens des oberen Abschnitts mittels einer ersten gespannten Feder und einer zweiten gespannten Feder mit einer addierten Kraft zu beaufschlagen, wobei die addierte Kraft der Summe der von der ersten Feder und der zweiten Feder auf den Block ausgeübten Kräfte entspricht, und wobei die Spannvorrichtung dazu ausgebildet ist, den Block während des Verlötens des zweiten Abschnitts nur mittels der zweiten gespannten Feder mit der zweiten Kraft zu beaufschlagen.

Die Spannvorrichtung weist vorzugsweise einen ersten Anschlag auf, wobei die Spannvorrichtung derart ausgebildet ist, dass die erste Feder nach dem Verlöten des ersten, oberen Abschnitts an dem ersten Anschlag zum Anliegen kommt, so dass die erste Feder nicht mehr auf den Block einwirkt, und wobei die Spannvorrichtung einen zweiten Anschlag aufweist, wobei die Spannvorrichtung derart ausgebildet ist, dass die zweite Feder nach dem Verlöten des zweiten Abschnitts an dem zweiten Anschlag zum Anliegen kommt, so dass die zweite Feder nicht mehr auf den Block einwirkt.

Weitere Merkmale und Vorteile der vorliegenden Erfindung sollen bei den nachfolgenden Figurenbeschreibungen von Ausführungsbeispielen der Erfindung anhand der Figuren beschrieben werden. Es zeigen:
- Fig. 1: eine perspektivische Darstellung eines Plattenwärmeübertragers;
- Fig. 2: eine perspektivische Darstellung eines mit dem erfindungsgemäßen Verfahren hergestellten Blocks;
- Fig. 3: eine schematische Darstellung des Ablaufs eines beispielhaften erfindungsgemäßen Herstellungsverfahrens eines Blocks mit zwei Lötschritten;
- Fig. 4: eine schematische Darstellung des Ablaufs eins beispielhaften erfindungsgemäßen Herstellungsverfahrens eines Blocks mit drei Lötschritten; und
- Fig. 5: eine Detaildarstellung eines Teils eines Blocks von Heizflächenelementen und Trennplatten vor und nach dem Lötvorgang.

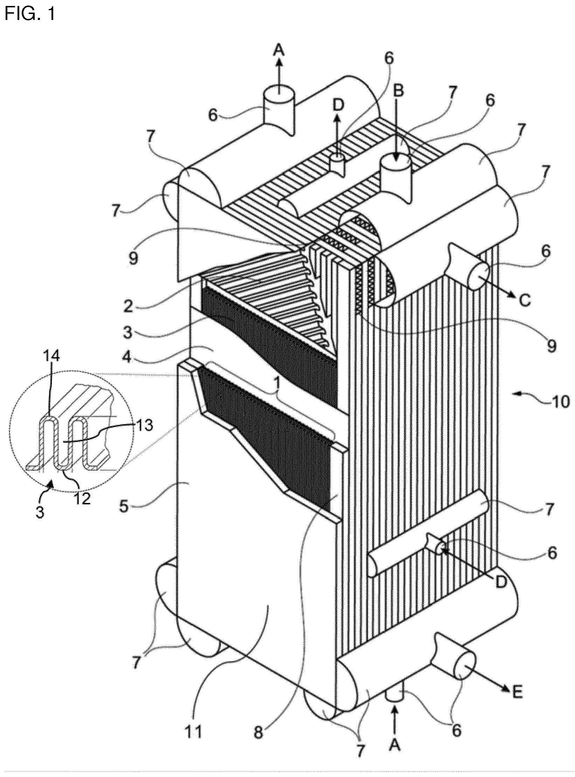

Fig. 1 zeigt beispielhaft einen Plattenwärmeübertrager 10 mit einem Block 11, wie er mit dem erfindungsgemäßen Verfahren herstellbar ist. Der Plattenwärmeübertrager 10 weist einen Plattenwärmeübertragerblock 11 mit parallel zueinander angeordneten Trennplatten (z.B. in Form von Trennblechen) 4 auf, die eine Vielzahl von Wärmeaustauschpassagen 1 für die miteinander in indirekte Wärmeübertragung zu bringenden Fluide A, B, C, D, E bilden. Die Trennplatten 4 bestehen z.B. aus einer Aluminiumlegierung. Der Wärmeaustausch zwischen den am Wärmeaustausch teilnehmenden Fluiden findet dabei zwischen benachbarten

Wärmeaustauschpassagen 1 statt, wobei die Wärmeaustauschpassagen 1 und somit die Fluide durch die Trennplatten 4 voneinander getrennt sind. Der Wärmeaustausch erfolgt mittels Wärmeübertragung über die Trennplatten 4 sowie über die zwischen den Trennplatten 4 angeordneten Heizflächenelemente (Fins) 3, die insbesondere ebenfalls aus einer Aluminiumlegierung bestehen können. Die Wärmeaustauschpassagen 1 sind durch bündig am Rand der Trennplatten 4 angebrachte Randleisten in Form von Blechstreifen 8, im Weiteren auch als Sidebars 8 bezeichnet, nach außen abgeschlossen.

Die besagten Sidebars 8 können ebenfalls aus einer Aluminiumlegierung bestehen. Innerhalb der Wärmeaustauschpassagen 1 bzw. zwischen je zwei Trennplatten 4 sind die gewellten Fins 3 angeordnet, wobei ein Querschnitt eines Fins 3 in dem Detail der Figur 1 gezeigt ist. Danach weisen die Fins 3 jeweils eine wellenförmige Struktur mit alternierenden Tälern 12 und Bergen 14 auf, wobei je ein Tal 12 mit einem benachbarten Berg 14 über eine Flanke 13 des betreffenden Fins 3 verbunden ist, so dass sich die wellenförmige Struktur ergibt. Die wellenförmige Struktur muss nicht verrundet ausgebildet sein, sondern kann auch eine rechteckförmige bzw. stufenförmige Gestalt aufweisen. Durch die wellenförmige Struktur werden - zusammen mit den beidseitigen Trennplatten 4 - Kanäle zur Führung des Fluides in der jeweiligen Wärmeaustauschpassage 1 gebildet. Die Berge 14 und Täler 12 der wellenförmigen Struktur des jeweiligen Fins 3 sind mit den jeweils benachbarten Trennplatten 4 verbunden. Die am Wärmeaustausch teilnehmenden Fluide sind somit im direkten Wärmekontakt mit den wellenförmigen Strukturen 3, so dass der Wärmeübergang durch den thermischen Kontakt zwischen den Bergen 14 bzw. Tälern 12 und Trennplatten 4 gewährleistet ist. Zur Optimierung der Wärmeübertragung wird die Ausrichtung der wellenförmigen Struktur in Abhängigkeit vom Anwendungsfall so gewählt, dass eine Gleich-, Kreuz-, Gegen- oder Kreuz-Gegenströmung zwischen benachbarten Passagen ermöglicht wird.

Der Plattenwärmeübertrager 10 weist ferner Öffnungen 9 zu den Wärmeaustauschpassagen 1 auf, z.B. an den Enden des Plattenwärmeübertragers 10 oder an einem mittleren Abschnitt, über die Fluide A, B, C, D, E in die Wärmeaustauschpassagen 1 eingeleitet bzw. aus diesen abgezogen werden können. Im Bereich dieser Öffnungen 9 können die einzelnen Wärmeaustauschpassagen 1 Verteilerfins 2 aufweisen, die das jeweilige Fluid auf die Kanäle eines Fins 3 der betreffenden Wärmeaustauschpassage 1 verteilen. Ein Fluid A, B, C, D, E kann z.B. über einen Stutzen 6 und einen Sammler 7 in eine Öffnung 9 des Plattenwärmeübertragerblocks 11 eingeleitet werden, über die besagte Öffnung 9 in die zugeordnete Wärmeaustauschpassage 1 eingeleitet werden und durch eine weitere Öffnung 9 aus der betreffenden Wärmeaustauschpassage 1 wieder abgezogen werden.

Die Trennplatten 4, Fins 3 und Sidebars 8 sowie ggf. weitere Komponenten (z.B. Verteilerfins 2) werden nach dem erfindungsgemäßen Verfahren durch Löten, vorzugsweise Hartlöten, miteinander verbunden.

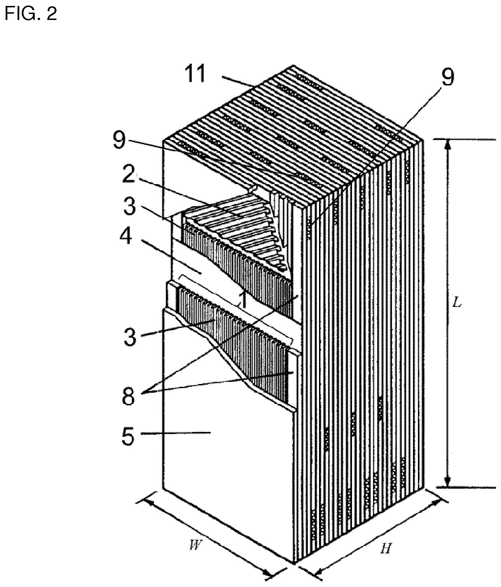

Fig. 2 zeigt zum besseren Überblick den Plattenwärmeübertragerblock 11 ohne die Stutzen 6 und Sammler 7.

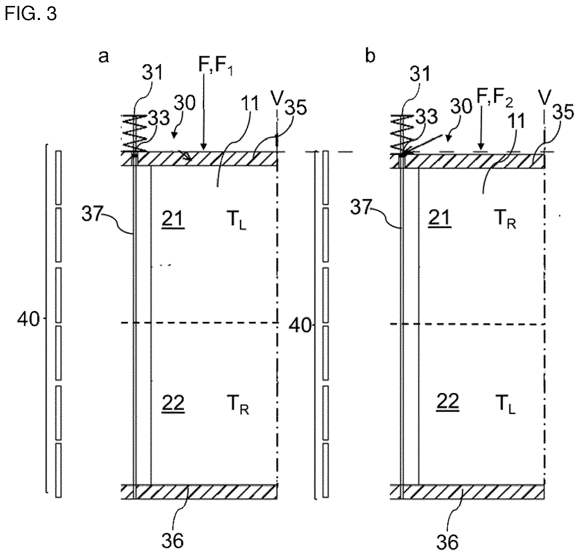

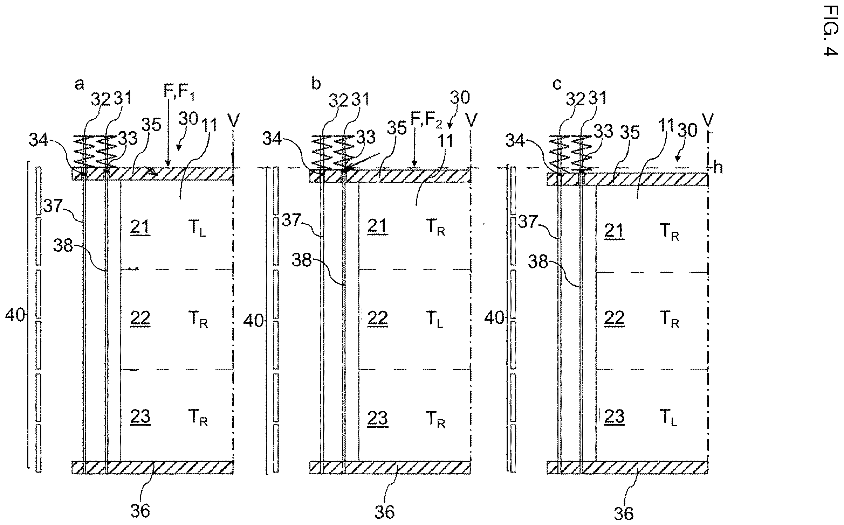

Fig. 3 und Fig. 4 zeigen schematisch den Ablauf des erfindungsgemäßen Verfahrens zur Herstellung eines Blocks 11 für einen Plattenwärmeübertrager 10, z.B. für den in Figur 1 gezeigten Plattenwärmeübertrager 10. Hierbei wird zum Verlöten ein in der Vertikalen V angeordneter Stapel von Komponenten des Plattenwärmeübertragerblocks 11 gebildet, wobei die besagten Komponenten z.B. die in Fig. 1 gezeigten Trennplatten 4, Fins 3, Verteilerfins 2 und Randleisten 8 sein können.

Gemäß dem in Fig. 3 dargestellten Ausführungsbeispiel (Löten in zwei Abschnitten 21,22 des Blocks 11 in zwei Schritten) wird der Stapel der Komponenten in einer Spannvorrichtung 30, insbesondere einem Spannrahmen, derart fixiert, dass mittels einer ersten Feder 31 eine externe Kraft F entlang der Vertikalen auf den Stapel der Komponenten bzw. den Block 11 ausgeübt werden kann.

Dabei weist die Spannvorrichtung 30 ein erste Platte 35 und eine zu der ersten Platte 35 parallele zweite Platte 36 auf, wobei die erste Platte 35 über eine erste Führung 37 (z.B. eine Führungsstange oder Führungsschiene) mit der zweiten Platte 36 derart verbunden ist, dass die erste Platte 35 entlang der ersten Führung 37 verschiebbar ist, wobei die erste Feder 31 dazu ausgebildet ist, eine parallel zu der ersten Führung 37 (also entlang der Vertikalen V) wirkende Kraft auf die erste Platte 35 auszuüben. Dies wird insbesondere dadurch erreicht, dass die erste Feder 31 mit der ersten Führung 37 oberhalb der ersten Platte 35 verbunden ist.

Der Block 11 wird dabei mittels der gespannten Feder 31 über die erste Platte 35 mit der ersten Kraft F₁ beaufschlagt.

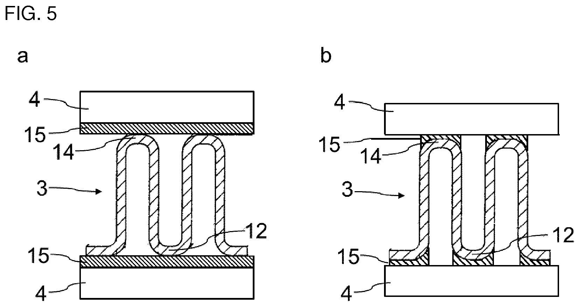

Weiterhin wird an den jeweils zu verlötenden Positionen ein Lotmaterial 15 (siehe Fig. 5, im Folgenden auch als Lot bezeichnet) zur Verfügung gestellt und der Plattenwärmeübertragerblock 11 wird in definierten Abschnitten 21,22,23 entlang der Vertikalen V mittels einer Heizvorrichtung 40 erwärmt, um den Plattenwärmeübertragerblock 11 an den zu verlötenden Positionen auf die Loterweichungstemperatur T_{L} zu bringen, so dass das Lotmaterial 15 schmilzt und die entsprechenden Komponenten verlötet werden.

Fig. 3a zeigt einen ersten Schritt des Verfahrens, bei dem nur ein oberer Abschnitt (hier die obere Hälfte) 21 des Blocks 11 auf die Loterweichungstemperatur T_{L} erwärmt wird, wobei ein zweiter Abschnitt 22 (hier die untere Hälfte) des Plattenwärmeübertragerblocks 11 auf eine im Vergleich zu der Loterweichungstemperatur T_{L} reduzierteTemperiertemperatur T_{R} gebracht wird, bzw. auf dieser gehalten wird.

Dabei wird der Block 11 während des ersten Schrittes mittels der ersten Feder 31 mit einer ersten externen Kraft F₁ beaufschlagt, um das Verlöten der Komponenten im oberen Abschnitt 21 zu ermöglichen.

Der zweite Abschnitt 22 weist während des ersten Schritts eine Temperiertemperatur T_{R} auf, das heißt, er wird insbesondere nur soweit aufgeheizt, dass die Unterschiede in den Wärmedehnungen zwischen dem oberen Abschnitt 21 und dem zweiten Abschnitt 22 hinreichend klein für eine gute Verlötung des ganzen Blocks 11 sind. Durch einen nicht zu großen Unterschied zwischen Loterweichungstemperatur T_{L} und Temperiertemperatur T_{R} wird insbesondere verhindert, dass sich die entsprechenden Abschnitte gegeneinander verziehen. Die Temperiertemperatur T_{R} wird jedoch so niedrig gehalten, dass die höhere Druckfestigkeit bei dieser Temperatur eine dauerhafte Verformung der Komponenten, z.B. ein Zusammendrücken der Lamellen in dem zweiten Abschnitt 22, verhindert, in welchem sowohl die externe Kraft F als auch die Gewichtskraft des oberen Abschnitts 21 auf dem zweiten Abschnitt 22 lastet.

Die Fig. 3b zeigt schematisch einen zweiten Schritt des erfindungsgemäßen Verfahrens, bei dem der zweite Abschnitt 22 (die untere Hälfte) des Blocks 11 auf die Loterweichungstemperatur T_{L} erwärmt wird, so dass die Komponenten des zweiten Abschnitts 22 verlötet werden, wobei der obere Abschnitt 21 auf eine Temperiertemperatur T_{R} gebracht wird bzw. diese Temperatur beibehält.

Nach dem Verlöten des oberen Abschnitts 21 ist die Erstreckung des Blocks 11 durch Eintauchen der Komponenten, z.B. Lamellen, in das Lot 15 etwas geringer geworden (siehe auch Fig. 5 a und b). Dadurch hat sich die erste Feder 31 verlängert und ist an einem ersten Anschlag 33 angeschlagen, so dass die erste Feder 31 entlastet ist, also keine Kraft mehr auf den Block 11 ausübt. Im zweiten Schritt des Verfahrens wirkt also keine externe Kraft F mehr auf den Block 11. Die zum Verlöten des zweiten Abschnitts 22 erforderliche Kraft wird in diesem Ausführungsbeispiel nur durch die Gewichtskraft des oberen Abschnitts 21 ausgeübt.

Diese Gewichtskraft ist so gering, dass sich die Komponenten in dem zweiten Abschnitt 22 nicht dauerhaft verformen, so dass dessen Komponenten nicht beschädigt werden und die Wärmeübertragungsleistung des Plattenwärmeübertragers 10 nicht beeinträchtigt wird.

Alternativ zu dem beschriebenen Verfahren kann natürlich auch in dem zweiten Schritt der Block 11 mit einer äußeren externen Kraft F beaufschlagt werden, solange die Gesamtkraft auf den zweiten Abschnitt 22 so gering ist, dass die Komponenten des Blocks 11 in diesem Abschnitt nicht verformt werden.

Die Fig. 4 zeigt schematisch ein weiteres Ausführungsbeispiel, bei dem drei Abschnitte 21,22,23 des Blocks 11 in drei Schritten gelötet werden. Hier wird der Stapel der Komponenten ebenfalls in einer Spannvorrichtung 30, insbesondere einem Spannrahmen, fixiert. Die Spannvorrichtung weist dabei eine erste Feder 31 und eine zweite Feder 32 auf, die gemeinsam eine addierte externe Kraft F entlang der Vertikalen auf den Stapel der Komponenten bzw. den Block 11 ausüben.

Dabei weist die Spannvorrichtung 30 ein erste Platte 35 und eine zu der ersten Platte 35 parallele zweite Platte 36 auf, wobei die erste Platte 35 über eine erste Führung 37 und eine zweite Führung 38 (z.B. Führungsstangen oder Führungsschienen) mit der zweiten Platte 36 derart verbunden ist, dass die erste Platte 35 entlang der ersten und zweiten Führung 37,38 verschiebbar ist, wobei die erste Feder 31 dazu ausgebildet ist, eine parallel zu der ersten Führung 37 (also entlang der Vertikalen V) wirkende Kraft auf die erste Platte 35 auszuüben, und wobei die zweite Feder 32 dazu ausgebildet ist, eine parallel zu der zweiten Führung 38 entlang der Vertikalen V wirkende Kraft auf die erste Platte 35 auszuüben. Dies wird insbesondere dadurch erreicht, dass die erste Feder 31 mit der ersten Führung 37 oberhalb der ersten Platte 35 verbunden ist und die zweite Feder 32 oberhalb der ersten Platte 35 mit der zweiten Führung 38 verbunden ist. Der Block 11 wird mittels der gespannten ersten und zweiten Feder 31,32 über die erste Platte 35 mit der ersten Kraft F₁ beaufschlagt.

Ebenfalls wird an den jeweils zu verlötenden Positionen ein Lotmaterial 15 (im Folgenden auch als Lot bezeichnet) zur Verfügung gestellt und der Plattenwärmeübertragerblock 11 wird in definierten Abschnitten 21,22,23 entlang der Vertikalen V mittels einer Heizvorrichtung 40 erwärmt, um den Plattenwärmeübertragerblock 11 an den zu verlötenden Positionen auf die Loterweichungstemperatur T_{L} zu bringen, so dass das Lotmaterial 15 schmilzt und die entsprechenden Komponenten verlötet werden.

Dabei zeigt Figur 4a einen ersten Schritt des Verfahrens, bei dem nur ein oberer Abschnitt (hier das obere Drittel) 21 des Plattenwärmeübertragerblocks 11 auf die Loterweichungstemperatur T_{L} erwärmt wird, wobei ein mittlerer Abschnitt 22 (hier das mittlere Drittel) und ein unterer Abschnitt 23 (hier das untere Drittel) des Plattenwärmeübertragerblocks 11 auf eine im Vergleich zu der Loterweichungstemperatur T_{L} reduzierteTemperiertemperatur T_{R} gebracht werden, bzw. auf dieser gehalten werden.

Dabei wird der Plattenwärmeübertragerblock 11 während des ersten Schrittes mittels der ersten Feder 31 und der zweiten Feder 32 mit einer ersten externen Kraft F₁ beaufschlagt, um das Verlöten der Komponenten im oberen Abschnitt 21 zu ermöglichen.

Der mittlere Abschnitt 22 und der untere Abschnitt 23 weisen während des ersten Schritts eine Temperiertemperatur T_{R} auf, das heißt sie werden insbesondere nur soweit aufgeheizt, dass die Unterschiede in den Wärmedehnungen zwischen dem oberen Abschnitt 21 und dem mittleren Abschnitt 22 bzw. dem unteren Abschnitt 23 hinreichend klein für eine gute Verlötung des ganzen Blocks 11 sind. Durch einen nicht zu großen Unterschied zwischen Loterweichungstemperatur T_{L} und Temperiertemperatur T_{R} wird insbesondere verhindert, dass sich die entsprechenden Abschnitte gegeneinander verziehen. Die Temperiertemperatur T_{R} wird aber so niedrig gehalten, dass die höhere Druckfestigkeit bei dieser Temperatur eine dauerhafte Verformung der Komponenten, z.B. ein Zusammendrücken der Lamellen verhindert, insbesondere im unteren Abschnitt 23, in dem sowohl die externe Kraft F als auch die Gewichtskraft des oberen Abschnitts 21 und des mittleren Abschnitts 22 lastet.

Die Fig. 4b zeigt schematisch einen zweiten Schritt des erfindungsgemäßen Verfahrens, bei dem der mittlere Abschnitt 22 des Plattenwärmeübertragerblocks 11 (hier das mittlere Drittel) auf die Loterweichungstemperatur T_{L} erwärmt wird, so dass die Komponenten des mittleren Abschnitts 22 verlötet werden, wobei der obere Abschnitt 21 und der untere Abschnitt 23 auf eine Temperiertemperatur T_{R} gebracht werden bzw. diese Temperatur beibehalten.

Wie in Fig. 4b gezeigt, ist der Block 11 nach dem Verlöten des oberen Abschnitts 21 durch Eintauchen der Komponenten, z.B. Lamellen, in das Lot 15 etwas geschrumpft, das heißt die Erstreckung des Blocks 11 entlang der Vertikalen V ist im Vergleich zu der Höhe h, also der ursprünglichen Erstreckung des Bocks 11 vor dem Verlöten des oberen Abschnitts 21 geringer geworden (siehe auch Fig. 5a und 5b). Die Federn 31,32, die auf die Spannvorrichtung 30 drücken, haben sich dadurch verlängert. Durch diese Verlängerung ist die erste Feder 31 an einem ersten Anschlag 33 angeschlagen, so dass die erste Feder 31 entlastet ist, also keine Kraft mehr auf den Block 11 ausübt. Infolgedessen übt nur die zweite Feder 32 eine zweite Kraft F₂ entlang der Vertikalen auf den Block 11 aus, die niedriger ist als die erste externe Kraft F₁, welche im ersten Schritt mittels beider Federn 31,32 auf den Block 11 ausgeübt wird (siehe Fig. 2a).

Die zum Löten des mittleren Abschnitts 22 erforderliche Kraft auf den Block 11 wird durch die Summe der zweiten Kraft F₂ und der Gewichtskraft des darüber liegenden oberen Abschnitts 21 zur Verfügung gestellt. Diese Gesamtkraft kann vorteilhafterweise durch den Betrag der zweiten externen Kraft F₂ so eingestellt werden, dass sich die Komponenten im mittleren Abschnitt 22 und im unteren Abschnitt 23 nicht dauerhaft verformen, so dass die Komponenten nicht beschädigt werden und die Wärmeübertragungsleistung des Plattenwärmeübertragers 10 nicht beeinträchtigt wird.

Die Fig. 4c zeigt schematisch einen dritten Schritt des erfindungsgemäßen Verfahrens, bei dem der untere Abschnitt 23 (hier das untere Drittel) des Blocks 11 auf die Loterweichungstemperatur T_{L} erwärmt wird, so dass die Komponenten des unteren Abschnitts 23 verlötet werden, wobei der obere Abschnitt 21 und der mittlere Abschnitt 22 auf eine Temperiertemperatur T_{R} gebracht werden bzw. diese Temperatur beibehalten.

Nach dem Verlöten des mittleren Abschnitts 22 ist die Erstreckung des Blocks 11 durch Eintauchen der Komponenten, z.B. Lamellen, in das Lot 15 noch etwas geringer geworden. Dadurch hat sich die zweite Feder 32 weiter verlängert und ist an einem zweiten Anschlag 34 angeschlagen, so dass auch die zweite Feder 32 entlastet ist, also keine Kraft mehr auf den Block 11 ausübt. Im dritten Schritt des Verfahrens wirkt also keine externe Kraft F mehr auf den Block 11. Die zum Verlöten des unteren Abschnitts 23 erforderliche Kraft wird in diesem Ausführungsbeispiel nur durch die Gewichtskraft des oberen Abschnitts 21 und des mittleren Abschnitts 22 ausgeübt.

Diese Gewichtskraft ist so gering, dass sich die Komponenten im unteren Abschnitt 23 nicht dauerhaft verformen, so dass dessen Komponenten nicht beschädigt werden und die Wärmeübertragungsleistung des Plattenwärmeübertragers 10 nicht beeinträchtigt wird.

Alternativ zu dem beschriebenen Verfahren kann natürlich auch in dem dritten Schritt der Block 11 mit einer äußeren externen Kraft F beaufschlagt werden, solange die Gesamtkraft auf den unteren Abschnitt 23 so gering ist, dass die Komponenten des Blocks 11 in diesem Abschnitt nicht verformt werden.

Fig. 5a und 5b zeigen ein Detail des Blocks 11 während des Lötvorgangs. Dabei sind zwei Trennplatten 4 sowie ein zwischen den Trennplatten 4 angeordnetes Heizflächenelement 3 dargestellt. Zwischen den Trennplatten 4 und dem Heizflächenelement 3 befindet sich eine Schicht aus Lotmaterial 15. Diese kann z.B. auf die Trennplatten 4 plattiert sein oder es können separate Schichten des Lotmaterials 15 beim Stapeln des Blocks 11 zwischen den Trennplatten 4 und dem Heizflächenelement 3 angeordnet werden.

Fig. 5a zeigt den Zustand vor dem Verlöten des dargestellten Teils des Blocks 11 und Fig. 5b zeigt den Zustand, in dem das Heizflächenelement 3 mit den benachbarten Trennplatten 4 verlötet ist. Aus dem Vergleich der Figuren 5a und 5b ist ersichtlich, dass diejenigen Täler 12 und Berge 14 des Heizflächenelements, die in dem gestapelten Block 11 die jeweils anliegenden Trennplatten 4 berühren, während des Verlötens in das verflüssigte Lotmaterial eingetaucht sind, so dass sich die Höhe des Blocks 11 verringert hat (siehe auch Fig. 3 und Fig. 4).

**Bezugszeichenliste**

| | |
|---|---|
| 1 | Wärmeaustauschpassage |
| 2 | Verteilerfin |
| 3 | Heizflächenelement oder Fin |
| 4 | Trennplatte |
| 5 | Deckplatte |
| 6 | Stutzen |
| 7 | Sammler |
| 8 | Randleiste (Sidebar) |
| 9 | Öffnung |
| 10 | Plattenwärmeübertrager |
| 11 | Block |
| 12 | Tal |
| 13 | Flanke |
| 14 | Berg |
| 15 | Lot |
| 21 | Oberer Abschnitt |
| 22 | Mittlerer Abschnitt |
| 23 | Unterer Abschnitt |
| 30 | Spannvorrichtung, |
| 31 | Erste Feder |
| 32 | Zweite Feder |
| 33 | Erster Anschlag |
| 34 | Zweiter Anschlag |
| 35 | Erste Platte |
| 36 | Zweite Platte |
| 37 | Erste Führung |
| 38 | Zweite Führung |
| 40 | Heizvorrichtung |
| A, B, C, D, E | Fluid |
| F | Kraft |
| F₁ | Erste Kraft |
| F₂ | Zweite Kraft |
| h | Höhe |
| T_{L} | Loterweichungstemperatur |
| T_{R} | Temperiertemperatur |
| V | Vertikale |

## Patentansprüche

1. Verfahren zur Herstellung eines gelöteten Blocks (11) für einen Plattenwärmeübertrager (10), wobei der Block (11) eine Mehrzahl an Wärmeaustauschpassagen (1) zum indirekten Wärmetausch zwischen zumindest zwei Fluiden (A, B,C,D,E) aufweist, wobei zunächst eine Mehrzahl an Trennplatten (4) und Wärmeleitstrukturen (2, 3) zusammen mit Lot (15) in der Vertikalen (V) in einem Block (11) gestapelt werden, und wobei nachfolgend
(a) der Block (11) entlang der Vertikalen (V) mit einer ersten Kraft (F₁), die von außen auf den Block (11) einwirkt, beaufschlagt wird, und ein erster, oberer Abschnitt (21) des Blocks (11) auf eine Loterweichungstemperatur (T_{L}) erwärmt wird, bei welcher das Lot (15) erweicht, so dass der obere Abschnitt (21) verlötet wird, und wobei zeitgleich ein zweiter Abschnitt (22) des Blocks (11), der entlang der Vertikalen (V) unten an den ersten Abschnitt (21) angrenzt, auf eine im Vergleich zu der Loterweichungstemperatur (TL) reduzierte Temperiertemperatur (T_{R}) gebracht wird, die oberhalb der Umgebungstemperatur liegt und bei welcher das Lot (15) nicht erweicht, und wobei nachfolgend zu Schritt (a),
(b) der Block (11) entlang der Vertikalen (V) mit keiner Kraft von außen oder einer zweiten Kraft (F₂), beaufschlagt wird, die von außen auf den Block (11) einwirkt, wobei die zweite Kraft (F₂) geringer ist als die erste Kraft (F₁), und der zweite Abschnitt (22) des Blocks (11) auf eine Loterweichungstemperatur (T_{L}) gebracht wird, bei welcher das Lot (15) erweicht, so dass der zweite Abschnitt (22) verlötet wird, und wobei der erste Abschnitt (21) zeitgleich auf eine im Vergleich zu der Loterweichungstemperatur (T_{L}) reduzierte Temperiertemperatur (T_{R}) gebracht wird, die oberhalb der Umgebungstemperatur liegt und bei welcher das Lot (15) erhärtet oder nicht erweicht.

2. Verfahren nach Anspruch 1, wobei der erste Abschnitt (21) durch eine obere Hälfte und der zweite Abschnitt (22) durch eine untere Hälfte des Blocks (11) gebildet ist.

3. Verfahren nach Anspruch 1, wobei der Block (11) einen weiteren, dritten Abschnitt (23) umfasst, der entlang der Vertikalen (V) unten an den zweiten Abschnitt (22) angrenzt, wobei nachfolgend zu Schritt (b) gemäß Schritt
(c) der Block mit keiner Kraft von außen beaufschlagt wird, und der dritte Abschnitt des Blocks (11) auf eine Loterweichungstemperatur (T_{L}) gebracht wird, bei welcher das Lot (15) erweicht, und der zweite Abschnitt (22) zeitgleich auf eine im Vergleich zur Loterweichungstemperatur reduzierte Temperiertemperatur (T_{R}) gebracht wird, die oberhalb der Umgebungstemperatur liegt, und bei welcher das Lot (15) erhärtet oder nicht erweicht.

4. Verfahren nach Anspruch 3, wobei der erste Abschnitt (21) durch ein oberes Drittel des Blocks (11) gebildet ist, und wobei der zweite Abschnitt (22) durch ein mittleres Drittel des Blocks (11) gebildet ist, und wobei der dritte Abschnitt (23) durch ein unteres Drittel des Blocks (11) gebildet ist.

5. Verfahren nach einem der vorhergehenden Ansprüche, wobei die erste Kraft (F₁) und die zweite Kraft (F₂) mittels mindestens einer gespannten Feder (31,32) auf den Block (11) aufgebracht werden, wobei die mindestens eine gespannte Feder (31,32) von oben auf die äußerste, obere Trennplatte (4) des Blocks einwirkt.

6. Verfahren nach einem der vorhergehenden Ansprüche, wobei der Block (11) während des Verlötens des oberen Abschnitts (21) in Schritt (a) mittels einer ersten gespannten Feder (31) und einer zweiten gespannten Feder (32) mit einer addierten Kraft (F₁) beaufschlagt wird, die der Summe der von der ersten gespannten Feder (31) und der zweiten gespannten Feder (32) auf den Block (11) ausgeübten Kräfte entspricht, und wobei der Block (11) während des Verlötens des zweiten Abschnitts (22) nur mittels der zweiten gespannten Feder (32) mit der zweiten Kraft (F₂) beaufschlagt wird.

7. Verfahren nach Anspruch 6, wobei die erste Feder (31) nach dem Verlöten des ersten, oberen Abschnitts (21) in Schritt (a) an einem ersten Anschlag (33) zum Anliegen kommt, so dass die erste Feder (31) nicht mehr auf den Block (11) einwirkt, und wobei die zweite Feder (32) nach dem Verlöten des zweiten Abschnitts (22) an einem zweiten Anschlag (34) zum Anliegen kommt, so dass die zweite Feder (32) nicht mehr auf den Block (11) einwirkt.

8. Verfahren nach einem der vorhergehenden Ansprüche, wobei die Wärmeleitstrukturen (2,3) durch gewellte Platten (2,3) gebildet sind.

9. Verfahren nach einem der vorhergehenden Ansprüche, wobei beim Stapeln der Trennplatten (4) und Wärmeleitstrukturen (2, 3) zwischen benachbarten Trennplatten (4) Randleisten (8) angeordnet werden, die eine jeweilige Wärmeaustauschpassage (1) nach außen hin abschließen.

10. Verfahren nach einem der vorhergehenden Ansprüche, **dadurch gekennzeichnet, dass** die Temperiertemperatur (T_{R}) in einem Bereich von 5 °C bis 150 °C, insbesondere 30 °C bis 100°C, unterhalb der Loterweichungstemperatur (T_{L}) liegt.

11. Verfahren zur Herstellung eines Plattenwärmeübertragers (10) aufweisend zumindest einen Block(11) hergestellt mit einem Verfahren nach einem der vorangehenden Ansprüche, wobei anschließend an die Schritte (a), (b) und ggf. (c) mindestens ein Stutzen (6) und/oder mindestens ein Sammler (7) auf den Block (11) aufgeschweißt wird.

## Claims

1. A method for producing a soldered block (11) for a plate heat exchanger (10), wherein the block (11) has a plurality of heat exchange passages (1) for indirect heat exchange between at least two fluids (A, B, C, D, E), wherein first a plurality of separating plates (4) and heat conducting structures (2, 3) are stacked together with solder (15) in the vertical (V) in a block (11), and wherein subsequently
(a) the block (11) is subjected along the vertical (V) to a first force (F₁) which acts on the block (11) from the outside, and a first, upper portion (21) of the block (11) is heated to a solder softening temperature (T_{L}) at which the solder (15) softens so that the upper portion (21) is soldered, and wherein, at the same time, a second portion (22) of the block (11) which adjoins the first portion (21) along the vertical (V) at the bottom thereof is brought to a tempering temperature (T_{R}) which is reduced in comparison to the solder softening temperature (T_{L}) and which is above the ambient temperature, and at which the solder (15) does not soften, and wherein, following step (a),
(b) the block (11) is not subjected to a force from the outside along the vertical (V), or is subjected to a second force (F₂) which acts on the block (11) from the outside, wherein the second force (F₂) is less than the first force (F₁), and the second portion (22) of the block (11) is brought to a solder softening temperature (T_{L}) at which the solder (15) softens so that the second portion (22) is soldered, and wherein the first portion (21) is brought at the same time to a tempering temperature (T_{R}) which is reduced in comparison to the solder softening temperature (T_{L}) and which is above the ambient temperature, and at which the solder (15) cures or does not soften.

2. The method according to Claim 1, wherein the first portion (21) is formed by an upper half and the second portion (22) is formed by a lower half of the block (11).

3. The method according to Claim 1, wherein the block (11) comprises a further third portion (23) which adjoins the second portion (22) along the vertical (V) at the bottom thereof, wherein, following step (b), according to step
(c) the block is not subjected to a force from the outside, and the third portion of the block (11) is brought to a solder softening temperature (T_{L}) at which the solder (15) softens, and the second portion (22) is brought at the same time to a tempering temperature (T_{R}) which is reduced in comparison to the solder softening temperature and which is above the ambient temperature, and at which the solder (15) cures or does not soften.

4. The method according to Claim 3, wherein the first portion (21) is formed by an upper third of the block (11), and wherein the second portion (22) is formed by a central third of the block (11), and wherein the third portion (23) is formed by a lower third of the block (11).

5. The method according to one of the preceding claims, wherein the first force (F₁) and the second force (F₂) are applied to the block (11) by means of at least one tensioned spring (31, 32), wherein the at least one tensioned spring (31, 32) acts from above on the outermost, upper separating plate (4) of the block.

6. The method according to one of the preceding claims, wherein, during the soldering of the upper portion (21) in step (a), the block (11) is subjected by means of a first tensioned spring (31) and a second tensioned spring (32) to an added force (F₁) which corresponds to the sum of the forces exerted on the block (11) by the first tensioned spring (31) and the second tensioned spring (32), and wherein, during the soldering of the second portion (22), the block (11) is only subjected to the second force (F₂) by means of the second tensioned spring (32).

7. The method according to Claim 6, wherein, after the soldering of the first upper portion (21) in step (a), the first spring (31) comes to rest against a first stop (33) so that the first spring (31) no longer acts on the block (11), and wherein, after the soldering of the second portion (22), the second spring (32) comes to rest against a second stop (34) so that the second spring (32) no longer acts on the block (11).

8. The method according to one of the preceding claims, wherein the heat conducting structures (2, 3) are formed by corrugated plates (2, 3).

9. The method according to one of the preceding claims, wherein, during the stacking of the separating plates (4) and heat conducting structures (2, 3), edge strips (8) which close off a respective heat exchange passage (1) toward the outside are arranged between adjacent separating plates (4).

10. The method according to one of the preceding claims,
**characterized in that** the tempering temperature (T_{R}) is in a range from 5°C to 150°C, in particular from 30°C to 100°C, below the solder softening temperature (T_{L}).

11. A method for producing a plate heat exchanger (10) comprising at least one block (11) produced by a method according to one of the preceding claims, wherein at least one connecting piece (6) and/or at least one collector (7) is welded onto the block (11) following steps (a), (b) and, where applicable, (c).

## Revendications

1. Procédé de fabrication d'un bloc (11) brasé pour un échangeur de chaleur à plaques (10), le bloc (11) présentant une pluralité de passages d'échange de chaleur (1) pour l'échange de chaleur indirect entre au moins deux fluides (A, B, C, D, E), une pluralité de plaques de séparation (4) et de structures conductrices de chaleur (2, 3) étant d'abord empilées avec le fil de plomb (15) en un bloc (11) dans la verticale (V), et ensuite
(a) le bloc (11) étant sollicité le long de la verticale (V) avec une première force (F₁), qui agit de l'extérieur sur le bloc (11), et une première section supérieure (21) du bloc (11) étant réchauffée à une température de ramollissement du fil de plomb (T_{L}), à laquelle le fil de plomb (15) se ramollit, de telle sorte que la section supérieure (21) est brasée, et simultanément une deuxième section (22) du bloc (11), qui est adjacente, le long de la verticale (V), à la partie inférieure de la première section (21), étant amenée à une température de régulation (T_{R}) réduite en comparaison à la température de ramollissement du fil de plomb (T_{L}), qui est supérieure à la température ambiante et à laquelle le fil de plomb (15) ne se ramollit pas, et suite à l'étape (a),
(b) le bloc (11) étant sollicité, le long de la verticale (V), par aucune force de l'extérieur ou par une deuxième force (F₂), laquelle agit de l'extérieur sur le bloc (11), la deuxième force (F₂) étant inférieure à la première force (F₁) et la deuxième section (22) du bloc (11) étant amenée à une température de ramollissement (T_{L}) à laquelle le fil de plomb (15) se ramollit de telle sorte que la deuxième section (22) soit brasée, et la première section (21) étant simultanément amenée à une température de régulation (T_{R}) réduite en comparaison à la température de ramollissement du fil de plomb (T_{L}), qui est supérieure à la température ambiante et à laquelle le fil de plomb (15) se durcit ou ne se ramollit pas.

2. Procédé selon la revendication 1, dans lequel la première section (21) est formée par une moitié supérieure et la deuxième section (22) par une moitié inférieure du bloc (11).

3. Procédé selon la revendication 1, dans lequel le bloc (11) comprend une troisième section (23) supplémentaire, qui est adjacente, le long de la verticale (V), à la partie inférieure de la deuxième section (22), dans lequel, suite à l'étape (b), conformément à l'étape
(c) le bloc n'est sollicité par aucune force de l'extérieur, et la troisième section du bloc (11) est amenée à une température de ramollissement du fil de plomb (T_{L}), à laquelle le fil de plomb (15) se ramollit, et la deuxième section (22) est simultanément amenée à une température de régulation (T_{R}) réduite en comparaison à la température de ramollissement du fil de plomb, qui est supérieure à la température ambiante et à laquelle le fil de plomb (15) durcit ou ne se ramollit pas.

4. Procédé selon la revendication 3, dans lequel la première section (21) est formée par un tiers supérieur du bloc (11), et dans lequel la deuxième section (22) est formée par un tiers central du bloc (11), et dans lequel la troisième section (23) est formée par un tiers inférieur du bloc (11).

5. Procédé selon l'une quelconque des revendications précédentes, dans lequel la première force (F₁) et la deuxième force (F₂) sont appliquées sur le bloc (11) au moyen d'au moins un ressort tendu (31, 32), dans lequel l'au moins un ressort tendu (31, 32) agit d'en haut sur la plaque de séparation (4) supérieure la plus extérieure du bloc.

6. Procédé selon l'une quelconque des revendications précédentes, dans lequel le bloc (11) est sollicité durant le brasage de la section (21) supérieure dans l'étape (a) au moyen d'un premier ressort (31) tendu et d'un deuxième ressort (32) tendu par une force additionnée (F₁), qui est la somme des forces appliquées par le premier ressort (31) tendu et le deuxième ressort (32) tendu sur le bloc (11), et dans lequel le bloc (11) est sollicité durant le brasage de la deuxième section (22) uniquement au moyen du deuxième ressort (32) tendu par la deuxième force (F₂).

7. Procédé selon la revendication 6, dans lequel le premier ressort (31), après le brasage de la première section (21) dans l'étape (a), vient en appui sur une première butée (33), de telle sorte que le premier ressort (31) n'agit plus sur le bloc (11), et dans lequel le deuxième ressort (32), après le brasage de la deuxième section (22), vient en appui sur une deuxième butée (34), de telle sorte que le deuxième ressort (32) n'agit plus sur le bloc (11).

8. Procédé selon l'une quelconque des revendications précédentes, dans lequel les structures conductrices de chaleur (2, 3) sont formées par des plaques ondulées (2, 3).

9. Procédé selon l'une quelconque des revendications précédentes, dans lequel, lors de l'empilage des plaques de séparation (4) et des structures conductrices de chaleur (2, 3), des bordures (8) sont disposées entre des plaques de séparation (4) adjacentes, qui ferment un passage d'échange de chaleur (1) vers l'extérieur.

10. Procédé selon l'une quelconque des revendications précédentes, **caractérisé en ce que** la température de régulation (T_{R}) se situe dans la plage de 5 °C à 150 °C, en particulier de 30 °C à 100 °C, en dessous de la température de ramollissement du fil de plomb (T_{L}).

11. Procédé de fabrication d'un échangeur de chaleur à plaques (10), présentant au moins un bloc (11) fabriqué au moyen du procédé selon l'une quelconque des revendications précédentes, dans lequel suite aux étapes (a), (b) et éventuellement (c), au moins un embout (6) et/ou au moins un collecteur (7) est/sont soudé(s) sur le bloc (11).
